# EUROPÄISCHE PATENTANMELDUNG

(11) **EP 2 876 776 A1**
(43) Veröffentlichungstag der Anmeldung: **27.05.2015**
(21) Anmeldenummer: 13194507.3
(22) Anmeldetag: 26.11.2013
(51) Int. Cl.: H02J 7/00, H01R 31/06, H02M 7/00, H05K 5/00, H01M 6/50

(54) **Extern gespeister Batterieersatz**

(71) Anmelder: Böhm, Rainer, 13465 Berlin (DE)
(72) Erfinder: Böhm, Rainer, 13465 Berlin (DE)
(74) Vertreter: Seliger, Knut

(57) **Zusammenfassung**

Die Erfindung betrifft eine Vorrichtung, ein System sowie ein Verfahren zur Versorgung eines elektrischen Gerätes mit elektrischer Energie, wobei die Vorrichtung eine Versorgungsstruktur (1) umfasst, die einen ersten und einen zweiten elektrisch leitfähigen Pol (11, 12) aufweist, und wobei die Versorgungsstruktur (1) dazu ausgebildet ist, anstelle zumindest einer Batterie in eine Batterieaufnahme (200) des elektrischen Gerätes eingesetzt zu werden, so dass der erste und der zweite Pol (11, 12) der Versorgungsstruktur (1) je einen Kontakt (201, 202) der Batterieaufnahme (200) des elektrischen Gerätes kontaktiert, und wobei die Vorrichtung einen elektrischen Anschluss zum Anlegen einer elektrischen Spannung an den ersten und zweiten Pol (11, 12) aufweist, so dass das elektrische Gerät über die Vorrichtung mit elektrischer Energie versorgbar ist.

## Beschreibung

Die Erfindung betrifft eine Vorrichtung zur Zuführung elektrischer Energie zu einem elektrischen Gerät umfassend eine Versorgungsstruktur sowie einen ersten und einen zweiten elektrisch leitenden beziehungsweise leitfähigen Pol zur elektrischen Kontaktierung jeweils eines Kontaktes eines elektrisch zu betreibenden Gerätes, sowie ein System, das besagte Vorrichtung aufweist.

Batteriebetriebene elektrische Geräte sind ein fester Bestandteil unseres Alltags. Trotz einer Vielzahl solcher Geräte haben sich einige Normen bezüglich der Batteriespannung und der Abmessungen der Batterien für eine Vielzahl solcher Geräte durchgesetzt. Solch eine Norm die international weit verbreitet ist, wird durch die Internationalen Elektrotechnische Kommission IEC in der IEC 60086 Norm ausgegeben und aktualisiert. Hier werden beispielsweise die aus dem alltagsgebrauch bekannten Baby, Mono, und AA Zellen beschrieben. Auch Knopfbatterien, die immer größere Verbreitung finden, werden hier über Normen, was die Spannung und auch die Außenmaße angeht normiert. Neben den "gewöhnlichen", nicht aufladbaren Batterien gibt es die auch die wieder aufladbaren Akkumulatoren, die aber mittlerer Weile im Sprachgebrauch, wie auch hier ebenso als Batterien bezeichnet werden und auch in der Norm IEC 60086 geführt sind.

Für Batteriebetrieb eignen sich insbesondere tragbare elektrische Geräte. Oftmals jedoch ist der Einsatzort / Radius eines solchen tragbaren Gerätes eng umgrenzbar, wie beispielsweise bei Garagentoröffnern, die im Wesentlichen im Auto aufbewahrt werden oder elektrischen Modelleisenbahnen, die meistens in einem Zimmer aufgebaut werden (in dem im Zweifelsfall auch eine Steckdose vorhanden ist). Hier entsteht immer wieder die Situation, dass die Batterie des zu betreibenden Gerätes leer ist, und ein Batteriewechsel vorgenommen werden muss, da z.B. ein Anlöten einer externen Stromversorgung insbesondere bei Fremdeigentum nicht ohne Weiteres erlaubt ist. So ein Batteriewechsel kann durch die Unterbrechung der Stromversorgung auch zu Verlusten von gespeicherten Informationen in dem betreffenden Gerät führen, was im schlimmsten Fall das Gerät gebrauchsunfähig macht. Weiterhin wird die Umwelt durch die Verwendung von Batterien, und insbesondere Einweg (primär-) Batterien belastet.

Hiervon ausgehend liegt daher der vorliegenden Erfindung die Aufgabe zugrunde, eine Vorrichtung und ein System bereitzustellen, die im Hinblick auf die vorgenannte Problematik verbessert sind.

Das erfindungsgemäße Problem wird durch eine Vorrichtung nach Anspruch 1 gelöst. Vorteilhafte Ausgestaltungen der Erfindung sind u.a. in den Unteransprüchen angegeben.
Dabei ist umfasst die Vorrichtung zur Versorgung eines elektrischen Gerätes mit elektrischer Energie gemäß Anspruch 1 eine Versorgungsstruktur, die einen ersten und einen zweiten elektrisch leitfähigen Pol aufweist, wobei die Versorgungsstruktur dazu ausgebildet ist, anstelle zumindest einer Batterie in eine Batterieaufnahme des elektrischen Gerätes eingesetzt zu werden, so dass der erste und der zweite Pol der Versorgungsstruktur je einen Kontakt der Batterieaufnahme des elektrischen Gerätes kontaktieren, und wobei die Vorrichtung einen elektrischen Anschluss zum Anlegen einer elektrischen Spannung an den ersten und zweiten Pol aufweist, so dass das elektrische Gerät über die Vorrichtung mit elektrischer Energie versorgbar ist.

Die erfindungsgemäße Vorrichtung vereinfacht daher die dauerhafte Versorgung eines insbesondere batteriebetriebenen elektrischen Gerätes mit Strom, insbesondere weil oftmals ein Anlöten insbesondere bei Fremdeigentum nicht möglich ist. Weiterhin werden insbesondere Schwankungen (z.B. durch Entladung der Batterie) in der Stromoder Spannungsversorgung durch Batterien durch die erfindungsgemäße Vorrichtung weitgehend eliminiert.

Es ist darauf hinzuweisen, dass die erfindungsgemäße Vorrichtung keine elektrische Energie speichert oder signifikante Mengen an elektrische Energie speichern kann. Die Vorrichtung ist daher in diesem Sinne insbesondere keine Batterie oder Kondensator. Eine erfindungsgemäße Versorgungsstruktur weist insbesondere die Pole an Stellen auf, die den Kontaktstellen einer Batterie entsprechen. Allerdings muss die Versorgungsstruktur die beiden Pole nicht zwingend an den, den jeweiligen Kontaktstellen einer Batterie entsprechenden Stellen aufweisen. Vielmehr ist es vorstellbar, dass beispielsweise der erste Pol an einer der Kontaktstelle der Batterie entsprechenden Stelle auf der Versorgungsstruktur angeordnet ist, aber die Anordnung des zweiten Pols auf der Versorgungsstruktur nicht der einer zweiten Kontaktstelle der Batterie entspricht. Dies trifft insbesondere dann zu, wenn die Batterieaufnahme zur Aufnahme einer Mehrzahl von Batterien ausgebildet ist, und die Versorgungsstruktur anstelle von zumindest zwei Batterien in das Batteriefach eingesetzt wird. Bei solch einer Anordnung liegen die Pole an Stellen, die nicht den Kontaktstellen einer einzelnen Batterie entsprechen.

Als geeignete Spannungsquellen kommen insbesondere Netzsteckdosen, Steckernetzgeräte, Bord-Stromversorgungen von beispielsweise Kraftfahrzeugen etc. in Frage.
Die Erfindung bezieht sich insbesondere auf Batterien, die handelsüblich erwerbbar sind und insbesondere in der IEC 60086 Norm geführt und aufgelistet sind.
Durch die erfindungsgemäße Vorrichtung kann ein batteriebetriebenes elektrisches Gerät insbesondere ohne die Verwendung von Batterien betrieben werden.

In einer besonders bevorzugten Ausführungsform der Erfindung ist vorgesehen, dass die Versorgungsstruktur eine Mehrzahl an Segmenten aufweist, wobei die Segmente insbesondere lösbar miteinander verbindbar oder verbunden sind.
Eine vorteilhafte Ausgestaltung der Versorgungsstruktur weist ein erstes Segment auf, auf dem der erste Pol angeordnet ist und ein zweites Segment, auf dem der zweite Pol angeordnet ist. Dabei entspricht beispielsweise der Abstand der Pole insbesondere dem Abstand der Batteriekontakte einer Batterie oder eines ganzzahlig Vielfachen dieses Abstandes.

Die Verbindung der Segmente kann insbesondere durch ein Nut- und Federsystem oder auch durch eine Klemm-, Klett- oder Schraubverbindungen ausgeführt sein.

In einer bevorzugten Variante der Erfindung weist die Versorgungsstruktur eine Form auf, die zumindest abschnittsweise im Wesentlichen der Form einer genormten Batterie entspricht, insbesondere einer Batterie mit IEC-Kennung R20, R14, R6, R03, R8D425, R1, 6F22, 3R12, 4R25, 8LR932, oder einer in der IEC 60086 Norm beschriebenen Knopfzelle und wobei die Versorgungsstruktur insbesondere im Wesentlichen die gleiche Form aufweist (also nicht nur abschnittsweise), wie eine solche Batterie.

Eine im Wesentlichen gleiche Form der Versorgungsstruktur sieht insbesondere eine Ausnehmung der Versorgungsstruktur für beispielsweise ein Anschlusskabel / eine leitfähige Verbindung zu dem Anschluss vor.
Weiterhin ist "im Wesentlichen " insbesondere so zu verstehen, dass die Form der Versorgungsstruktur Eigenschaften aufweist, die ein für Batterien typisches Einlegen, Einklemmen oder Einrasten in das Batteriefach des elektrischen Gerätes ermöglicht.

Bevorzugt ist die Versorgungsstruktur hohl oder massiv ausgeführt.

In einer bevorzugten Variante der Erfindung weist die Versorgungsstruktur ein elektrisch isolierendes Material auf, insbesondere Holz, Plastik, Keramik, Stein, Beton, Gips, Glas, Plexiglas, Porzellan oder eine Mischung davon.

In einer bevorzugten Ausführungsform der Erfindung ist vorgesehen, dass der Anschluss über eine leitfähige Verbindung, insbesondere über ein Kabel, mit dem ersten und dem zweiten Pol verbindbar oder verbunden ist, wobei die leitfähige Verbindung insbesondere abschnittsweise als Flachbandleitung ausgebildet ist, die insbesondere auf Polyester aufgebrachte Metallbahnen umfasst. Diese Flachbandleitung ist insbesondere dazu gedacht, die elektrische Energieversorgung durch einen eventuell nur schmalen Schlitz der verschlossenen Batterieaufnahme des elektrischen Gerätes ohne Beeinträchtigung der Konstruktion des elektrischen Gerätes komfortabel zu gewährleisten.

Im Bereich der Versorgungsstruktur kann diese leitfähige Verbindung insbesondere innerhalb der Versorgungsstruktur verlaufen, wobei die beiden Pole der Versorgungsstruktur insbesondere aus dem Inneren der Versorgungsstruktur her kontaktiert sind.
Dabei wird der abzugebende Strom insbesondere von elektrisch leitenden und gegeneinander isolierten Kabeln, die insbesondere durch die hohle oder nichthohle Versorgungsstruktur geführt sind, mittels einer leitenden Verbindung an den ersten und zweiten Pol der Versorgungsstruktur gebracht.

In einer bevorzugten Ausführungsform der Erfindung ist insbesondere vorgesehen, dass die Versorgungsstruktur eine Anschlussvorrichtung aufweist, an die die leitfähige Verbindung insbesondere über einen zweiten an die Anschlussvorrichtung lösbar anschließbaren oder angeschlossenen Anschluss verbindbar oder verbunden ist. Dieser zweite Anschluss verbindet einen leitfähigen Bereich der Versorgungsstruktur mit der leitfähigen Verbindung, so dass diese über den zweiten Anschluss von der Versorgungsstruktur lösbar ist.
Der zweite Anschluss kann beispielsweise durch ein Stecker- und Buchsenarrangement an der Versorgungsstruktur realisiert sein. So können je nach Bedarf und Kombination von Segmenten der Versorgungsstruktur die elektrische Spannung an die entsprechenden Segmente angelegt werden. So kann z.B. ein Segment durch zwei solcher Stecker kontaktiert werden, oder es werden zwei Segmente mit jeweils nur einem Stecker kontaktiert.

In einer bevorzugten Variante der Erfindung wird der Anschluss zum Anlegen einer elektrischen Spannung über eine lösbare, insbesondere magnetische Steck-, Rast-, Klemm-, Klett- oder Klebeverbindung mit der anschließbaren oder angeschlossenen Spannungsquelle gebildet, wobei der Anschluss insbesondere als Stecker für insbesondere ISO 4165-Steckdosen, oder als Zigarettenanzünder-Stecker nach der Norm SAE J563 oder für Bordsteckdosen von Kraftfahrzeugen ausgebildet ist.
Bei dieser Ausführungsform der Erfindung kann insbesondere eine Stromversorgung des elektrischen Gerätes über eine Bordstromversorgung eines Fahrzeugs erfolgen.

Bevorzugt ist in oder an der Versorgungsstruktur eine erste elektrische oder integrierte Schaltung angeordnet, die zwischen den Anschluss und dem ersten und / oder dem zweiten Pol geschaltet ist, wobei diese erste Schaltung insbesondere eine Diode, einen Gleichrichter, eine Überspannungs-Sicherung, einen elektrischen Widerstand, einen Schalter und / oder ein Leuchtmittel, insbesondere eine Leuchtdiode aufweist. Insbesondere ist durch einen Gleichrichter oder eine Diode ein Verpolungsschutz gewährleistet.

In einer bevorzugten Ausführungsform der Erfindung ist vorgesehen, dass die Vorrichtung eine Vorwahleinrichtung für eine elektrische Spannung, insbesondere für eine Ausgangsspannung, aufweist, wobei die Vorrichtung eine zweite elektrisch, insbesondere elektronische oder integrierte Schaltung, insbesondere einen Spannungswandler / Transformator, aufweist, welche dazu ausgebildet und vorgesehen ist, eine an ihr anliegende Eingangsspannung in die durch die Vorwahleinrichtung gewählte Ausgangsspannung umzuwandeln und diese an dem ersten und zweiten Pol anzulegen.
Es ist natürlich insbesondere möglich die erste und die zweite Schaltung miteinander zu kombinieren, so dass die Funktionen beider Schaltungen in einer Schaltung zusammengefasst sind.

In einer bevorzugten Variante der Erfindung ist der Abstand und insbesondere die relative geometrische Lage des ersten und des zweiten Pols zueinander einstellbar, insbesondere so, dass der Abstand des ersten und des zweiten Pols den Stellen der Batteriekontakte einer Batterie einer in der IEC 60086 Norm beschriebenen Knopfzelle oder Batterie entspricht oder auch eines Vielfachen des Abstandes der Stellen der Batteriekontakte.

Insbesondere ist der Abstand des ersten und des zweiten Pols zueinander über eine Schraub-, Rast- oder Federeinrichtung oder einem vergleichbaren Mittel einstellbar.

Das erfindungsgemäße Problem wird weiterhin durch ein System nach Anspruch 10 gelöst.
Dabei ist gemäß Anspruch 10 vorgesehen, dass der erste Pol der Versorgungsstruktur leitfähig mit dem ersten Kontakt einer Schaltungsanordnung sowie der zweite Pol der Vorrichtung leitfähig mit dem zweiten Kontakt der Schaltungsanordnung verbunden sind.

Solche Schaltungsanordnungen sind in einer Vielzahl von elektrischen Geräten zu finden, bei denen insbesondere mehrere Batterien verwendet werden, um beispielsweise eine höhere Spannung zu erzeugen (Serienschaltung von Batterien) oder auch um einen höheren Stromfluss (Parallelschaltung von Batterien) zu gewährleisten. Als Kontakt einer solchen Schaltungsanordnung ist insbesondere der Kontakt gemeint, an dem die Gesamtspannung der Schaltungsanordnung anliegt. Eine solche Schaltungsanordnung wird insbesondere in einem Batteriefach des elektrischen Gerätes angeordnet.
In einer bevorzugten Ausführungsform der Erfindung ist vorgesehen, dass zumindest ein Überbrückungselement so ausgebildet ist, anstelle zumindest einer Batterie in die Schaltungsanordnung eingesetzt zu werden.

Diese Überbrückungselemente sind insbesondere dazu da, eine Stabilisierung der Versorgungsstruktur in einem Batteriefach zu gewährleisten, so dass ein Verrutschen der Versorgungsstruktur im Batteriefach möglichst vermieden wird.

In einer bevorzugten Variante der Erfindung ist der erste und / oder der zweite Pol der mindestens einen Versorgungsstruktur mit dem jeweiligen Kontakt der Schaltungsanordnung durch zumindest ein Überbrückungselement elektrisch verbunden, wobei das Überbrückungselement so ausgebildet ist, dass es den Strom von dem jeweiligen Pol der mindestens einen Versorgungsstruktur zu dem jeweiligen Kontakt der Schaltungsanordnung leitet.
Hier fungiert das Überbrückungselement als leitendes Element, welches den Kontakt zwischen zumindest einem Pol der Versorgungsstruktur und dem Kontakt der Schaltungsanordnung herstellt.

Bevorzugt ist zwischen zwei Segmenten der mindestens einen Versorgungsstruktur zumindest ein Überbrückungselement angeordnet, wobei das mindestens eine Überbrückungselement insbesondere elektrisch nichtleitfähig ist.
Diese Konstellation ist insbesondere von Vorteil, wenn die Versorgungsstruktur zwei Segmente aufweist, die jeweils einen Pol aufweisen und disjunkt im Batteriefach angeordnet sind. Durch Einsatz dieser Überbrückungselemente wird die Versorgungsstruktur insbesondere im Batteriefach fixiert.

In einer bevorzugten Variante der Erfindung weist das System eine Spannungsquelle auf, die über den Anschluss der mindestens einen Vorrichtung an die beiden Pole der mindestens einen Versorgungsstruktur angeschlossen ist, und wobei insbesondere die Gesamtspannung der Schaltungsanordnung durch die Ausgangsspannung der mindestens einen Versorgungsstruktur bestimmt ist.

Das erfindungsgemäße Problem wird weiterhin durch ein Verfahren nach Anspruch 15 gelöst.

Dabei ist vorgesehen, dass die elektrischen Kontakte des zu betreibenden elektrischen Gerätes mit den Polen der Vorrichtung beziehungsweise mit den Kontaktpolen des Systems verbunden werden, der Anschluss der mindestens einen Vorrichtung an die Spannungsquelle angeschlossen wird, und derart eine elektrische Spannung an das zu betreibende elektrische Gerät angelegt wird.

Weitere Ansprüche bzw. Anspruchsformen zur weiteren Ausgestaltung der Erfindung könnten insbesondere wie folgt formuliert werden:
Vorrichtung zur Zuführung elektrischer Energie, umfassend eine Versorgungsstruktur und daran angeordnet einen ersten und einen zweiten elektrisch leitenden beziehungsweise leitfähigen Pol zur elektrischen Kontaktierung jeweils eines Kontaktes eines elektrisch zu betreibenden Gerätes, wobei die Vorrichtung einen elektrischen Anschluss zum Anlegen einer elektrischen Spannung an den ersten und zweiten Pol aufweist, dadurch gekennzeichnet, dass der erste und zweite Pol an Stellen der Versorgungsstruktur angeordnet sind, an denen auch Batteriekontakte einer gemäß IEC 60086 genormten Batterie angeordnet sind, wobei die Versorgungsstruktur dazu vorgesehen und ausgebildet ist, anstelle einer Batterie verwendet zu werden.

Weitere Merkmale und Vorteile der Erfindung werden in den nachfolgenden Figurenbeschreibungen von Ausführungsbeispielen der Erfindung anhand der Figuren erläutert. Es zeigen:
- Fig. 1: eine schematische Abbildung einer erfindungsgemäßen Vorrichtung;
- Fig. 2: eine schematische Abbildung einer weiteren Ausführungsform einer erfindungsgemäßen Vorrichtung;
- Fig. 3: eine schematische Abbildung zweier Überbrückungselemente;
- Fig. 4: eine schematische Abbildung eines erfindungsgemäßen Systems; und
- Fig. 5: eine schematische Abbildung einer weiteren Ausführungsform eines erfindungsgemäßen Systems.

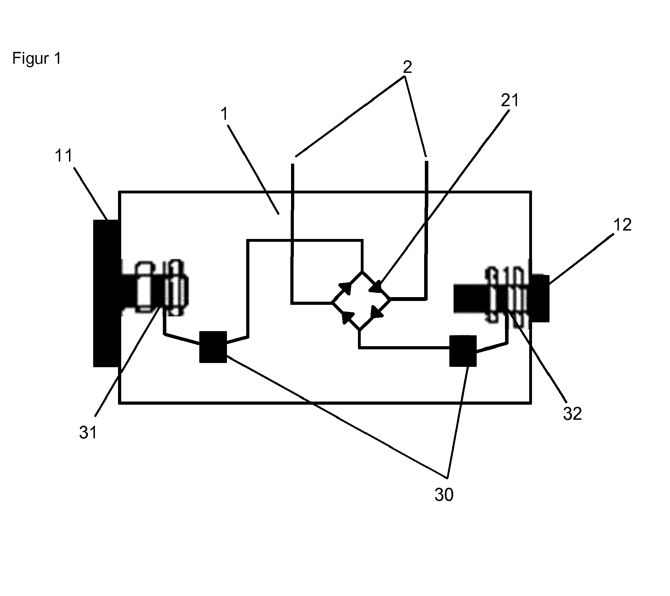

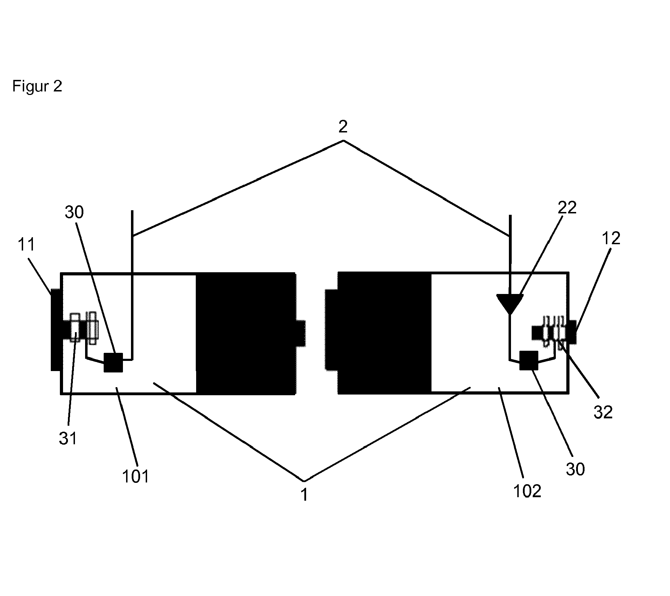

Figur 1 und 2 zeigen eine schematische Abbildung der erfindungsgemäßen Vorrichtung. Dabei ist eine Versorgungsstruktur 1 batterieförmig ausgebildet und weist einen ersten Pol 11 (beispielsweise den elektrischen Minuspol) und einen zweiten Pol 12 (beispielsweise den elektrischen Pluspol) auf, wobei beide Pole 11, 12 über eine leitfähige Verbindung 2, insbesondere in Form von elektrisch leitenden und gegeneinander isolierten Kabeln, elektrisch kontaktierbar sind. Im Inneren der Versorgungsstruktur 1 sind die Pole 11, 12 über je eine Kontaktierungsvorrichtung 31, 32, insbesondere über eine Lötfahne 30, mit der leitfähigen Verbindung 2, verbunden.

Es ist natürlich auch möglich die leitfähige Verbindung von außerhalb der Versorgungsstruktur zu führen, also ohne die Kontaktierung der Pole 11, 12 aus dem Inneren der Versorgungsstruktur 1 vorzunehmen.
Die elektrisch leitfähige Leitung 2 in Figur 1 ist über einen Gleichtrichter 21 an die beiden Pole 11, 12 angeschlossen, so dass eine Verpolung der Anschlüsse der Pole 11, 12 keine Auswirkung hat. Die Pole 11, 12 sind so an der Versorgungsstruktur 1 angeordnet, dass sie jeweils an den Stellen der Versorgungsstruktur 1 sind, an denen auf einer Batterie die entsprechenden Positionen der Kontaktstellen sind.
In Figur 2 wird eine Ausführungsform dargestellt, die eine Versorgungsstruktur 1 mit zwei Segmenten 101, 102 zeigt, wobei jedes Segment 101, 102 jeweils einen Pol 11, bzw. 12 aufweist. Weiterhin weist das Segment 102 eine Diode auf, die vor den Pol 12 geschaltet ist, so dass keine Spannung über die leitfähige Verbindung an den beiden Polen 11, 12 angelegt werden kann, wenn eine Verpolung des Anschlusses vorliegt. Die Versorgungsstruktur 1, einzelne oder Teilbereiche der Segmente 101, 102 der Versorgungsstruktur 1 können insbesondere aus Holz gefertigt sein. Die leitenden Pole 11, 12 können beispielsweise durch metallische Schrauben realisiert werden. Wobei Unterlegscheiben zwischen dem Schraubenkopf und der Versorgungsstruktur 1 insbesondere dazu dienen können, ein Ende der leitfähige Verbindung, z.B. eines Drahtes, elektrisch leitfähig mit der Schraube festzuklemmen.

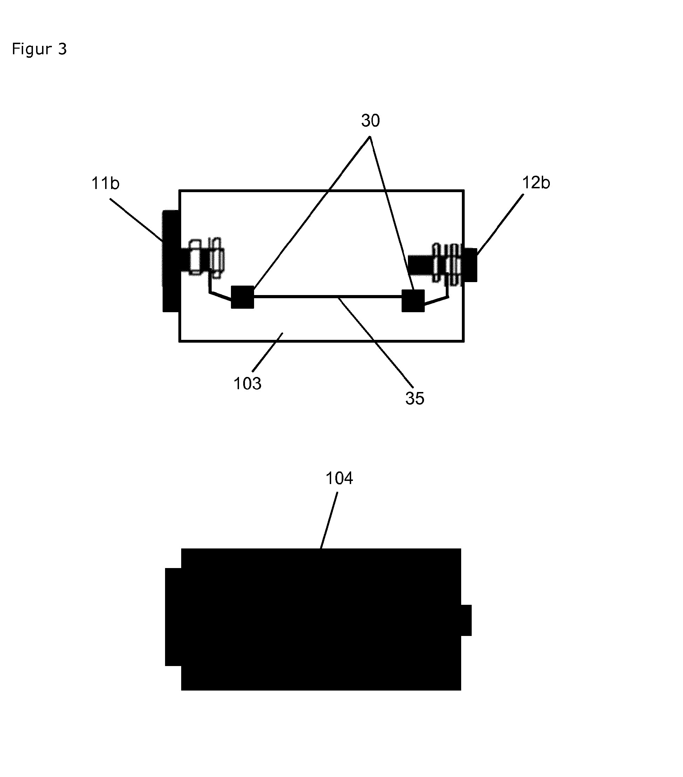

Figur 3 zeigt zwei Überbrückungselemente 103, 104 wobei eines (103) leitfähig ausgebildet ist und das andere (104) insbesondere nicht. Das leitfähige Überbrückungselement 103 weist ebenso Pole 11 b und 12b auf, die zur Kontaktierung von Kontakten, insbesondere der Pole 11 oder 12 der Versorgungsstruktur 1 oder der Kontakte 201, 202 einer Schaltungsanordnung, oder einer Batterieaufnahme 200, geeignet positioniert sind. Der Strom wird durch ein leitfähiges Element 35 im Inneren des leitfähigen Überbrückungselementes 103 geleitet. Das nichtleitfähige oder nichtleitende Überbrückungselement 104, ist insbesondere zumindest abschnittsweise aus einem nichtleitenden Material gefertigt. Es ist denkbar, ein leitfähiges Überbrückungselement 103 durch einen Schalter, der die leitfähige Verbindung der Pole 11 b und 12b leitend oder nichtleitend schaltet, zwischen einem nichtleitfähigen und leitfähigen Überbrückungselement 104, 103 hin- und her zu wandeln, so wie der Bedarf es vorsieht.

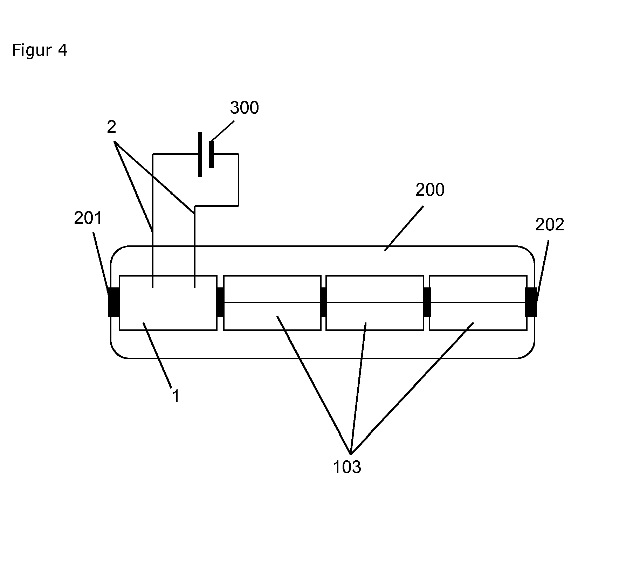

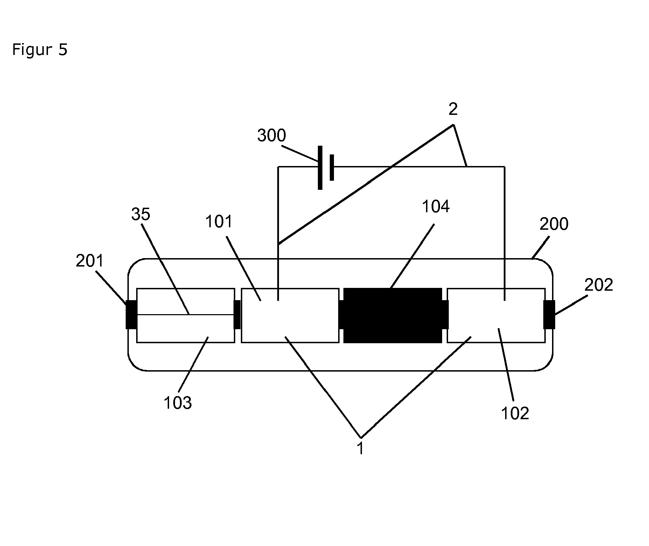

Figur 4 und 5 zeigen jeweils Schaltungsanordnungen in denen das erfindungsgemäße System realisiert ist. In einer Batterieaufnahme 200 eines elektrischen Gerätes, ist eine Versorgungsstruktur 1 nebst Überbrückungselementen 103, 104 angeordnet. So dass die Kontakte 201, 202 der Batterieaufnahme 200 elektrisch kontaktiert sind und eine Energieversorgung durch eine extern angeschlossene Spannungsquelle 300, insbesondere eines handelsüblichen Steckernetzgerätes, gewährleistet ist.
Insbesondere in Figur 5 sei darauf hingewiesen, das nicht zwingend alle Batteriefächer der Batterieaufnahme 200 besetzt sein müssen, um eine Kontaktierung und eine Versorgung eines angeschlossenen elektrischen Gerätes zu gewährleisten. In Figur 5 ist beispielsweise das Überbrückungselement 104 entbehrlich, sofern die stabile Kontaktierung der Versorgungstruktur 1 mit den Kontakten 201, 202 der Batterieaufnahme 200 gewährleistet ist.

Die Versorgungsstruktur 1 und die Überbrückungselemente 103, 104 können hohl bzw. massiv ausgeführt sein. Weiterhin kann die Versorgungsstruktur 1 auch einen ein- oder angebauten Anschlussstecker / -buchse für die Stromzuführung enthalten.

Weiterhin können mehrere Versorgungsstrukturen 1 auch in Serie oder parallel geschaltet werden oder auch als eine direkte Anreihung zum Nachbilden einer Batterie angeordnet werden, beispielsweise bei einer Batterie-Typ A23 als Aneinanderreihung von 8 Knopfzellen (die von einer oder mehreren Versorgungsstrukturen 1 ersetzt werden) zu je 1,5 Volt.
In diesem Zusammenhang ist es erwähnenswert, dass wenn in einer Reihenschaltung von beispielsweise vier 1,5V Batterien, diese Batterien durch das erfindungsgemäße System umfassend die erfindungsgemäße Vorrichtung ersetzt werden sollen, die Versorgungsstruktur 1 eine Ausgangsspannung von 6V liefert.

## Patentansprüche

1. Vorrichtung zur Versorgung eines elektrischen Gerätes mit elektrischer Energie, wobei die Vorrichtung eine Versorgungsstruktur (1) umfasst, die einen ersten und einen zweiten elektrisch leitfähigen Pol (11, 12) aufweist,
**dadurch gekennzeichnet, dass**
die Versorgungsstruktur (1) dazu ausgebildet ist, anstelle zumindest einer Batterie in eine Batterieaufnahme (200) des elektrischen Gerätes eingesetzt zu werden, so dass der erste und der zweite Pol (11, 12) der Versorgungsstruktur (1) je einen Kontakt (201, 202) der Batterieaufnahme (200) des elektrischen Gerätes kontaktiert, und wobei die Vorrichtung einen elektrischen Anschluss zum Anlegen einer elektrischen Spannung an den ersten und zweiten Pol (11, 12) aufweist, so dass das elektrische Gerät über die Vorrichtung mit elektrischer Energie versorgbar ist.

2. Vorrichtung nach Anspruch 1, **dadurch gekennzeichnet, dass** die Versorgungsstruktur (1) eine Mehrzahl an Segmenten (101, 102) aufweist, wobei die Segmente (101, 102) insbesondere lösbar miteinander verbindbar, oder miteinander verbunden sind.

3. Vorrichtung nach Anspruch 1 oder 2, **dadurch gekennzeichnet, dass** die Versorgungsstruktur (1) und / oder die Segmente (101, 102) der Versorgungsstruktur (1) eine Form aufweisen, die zumindest abschnittsweise im Wesentlichen der Form einer Batterie entspricht.

4. Vorrichtung nach einem der vorhergehenden Ansprüche, **dadurch gekennzeichnet, dass** die Versorgungsstruktur (1) ein elektrisch isolierendes Material aufweist, insbesondere Holz, Plastik, Keramik, Stein, Beton, Gips, Glas, Plexiglas, Porzellan oder eine Mischung davon.

5. Vorrichtung nach einem der vorhergehenden Ansprüche, **dadurch gekennzeichnet, dass** der Anschluss über eine leitfähige Verbindung (2) insbesondere über ein Kabel mit dem ersten und den zweiten Pol (11,12) verbindbar oder verbunden ist, wobei die leitfähige Verbindung (2) insbesondere zumindest abschnittsweise als Flachbandleitung ausgebildet ist, die insbesondere auf Polyester aufgebrachte Metallbahnen umfasst.

6. Vorrichtung nach einem der vorhergehenden Ansprüche, **dadurch gekennzeichnet, dass** der Anschluss zum Anlegen einer elektrischen Spannung über eine lösbare, insbesondere magnetische Steck-, Rast-, Klemm-, Klett- oder Klebeverbindung mit einer anschließbaren Spannungsquelle (300) gebildet wird.

7. Vorrichtung nach einem der vorhergehenden Ansprüche, **dadurch gekennzeichnet, dass** in oder an der Versorgungsstruktur (1) eine elektrische oder integrierte erste Schaltung angeordnet ist, die zwischen dem Anschluss und dem ersten und / oder dem zweiten Pol (11, 12) geschaltet ist, wobei diese erste Schaltung insbesondere eine Diode (22), einen Gleichrichter (21), eine Überspannungs-Sicherung, einen elektrischen Widerstand, einen Schalter und / oder ein Leuchtmittel, insbesondere eine Leuchtdiode aufweist.

8. Vorrichtung nach einem der vorhergehenden Ansprüche, **dadurch gekennzeichnet, dass** die Vorrichtung eine Vorwahleinrichtung für eine elektrische Spannung, insbesondere für eine Ausgangsspannung, aufweist, wobei die Vorrichtung eine elektrisch, insbesondere elektronische oder integrierte zweite Schaltung, insbesondere einen Spannungswandler / Transformator, aufweist, welche dazu ausgebildet und vorgesehen ist, eine an ihr anliegende Eingangsspannung in die durch die Vorwahleinrichtung gewählte Ausgangsspannung umzuwandeln und diese an dem ersten und zweiten Pol (11, 12) anzulegen.

9. Vorrichtung nach einem der vorhergehenden Ansprüche, **dadurch gekennzeichnet, dass** der Abstand und insbesondere die relative geometrische Lage des ersten und des zweiten Pols (11, 12) zueinander einstellbar ist, insbesondere so, dass der Abstand des ersten und zweiten Pols (11, 12) den Stellen der Batteriekontakte einer Batterie einer in der IEC 60086 Norm beschriebenen Knopfzelle oder Batterie entspricht.

10. System aufweisend zumindest eine Vorrichtung zur Zuführung elektrischer Energie nach einem der vorhergehenden Ansprüche, wobei zumindest eine Versorgungsstruktur (1) in einer Reihen- oder Parallelschaltungsanordnung für Batterien anstelle mindestens einer Batterie angeordnet ist, und wobei eine solche Schaltungsanordnung (200) einen ersten Kontakt (201) und einen zweiten Kontakt (202) aufweist, an denen die Gesamtspannung der Schaltungsanordnung (200) abgreifbar ist,
**dadurch gekennzeichnet, dass**
der erste Pol (11) der mindestens einen Versorgungsstruktur (1) leitfähig mit dem ersten Kontakt (201) sowie der zweite Pol (12) der mindestens einen Versorgungsstruktur (1) leitfähig mit dem zweiten Kontakt (202) verbunden ist.

11. System nach Anspruch 10, **dadurch gekennzeichnet, dass** zumindest ein Überbrückungselement (103, 104) so ausgebildet ist, anstelle zumindest einer Batterie in die Schaltungsanordnung eingesetzt zu werden.

12. System nach Anspruch 11, **dadurch gekennzeichnet, dass** der erste und / oder der zweite Pol (11, 12) der mindestens einen Versorgungsstruktur (1) mit dem jeweiligen Kontakt (201, 202) der Schaltungsanordnung (200) durch zumindest ein Überbrückungselement (103) elektrisch verbunden ist, wobei das Überbrückungselement (103) so ausgebildet ist, dass es den Strom von dem jeweiligen Pol (11, 12) der mindestens einen Versorgungsstruktur (1) zu dem jeweiligen Kontakt (201, 202) der Schaltungsanordnung (200) leitet.

13. System nach Anspruch 11 oder 12, **dadurch gekennzeichnet, dass** zwischen zwei Segmenten (101, 102) der mindestens einen Versorgungsstruktur (1) zumindest ein Überbrückungselement (104) angeordnet ist und wobei das mindestens eine Überbrückungselement (104) insbesondere elektrisch nichtleitfähig oder nichtleitend ist.

14. System nach einem der Ansprüche 10 bis 13, **dadurch gekennzeichnet, dass** das System eine Spannungsquelle (300) aufweist, die über den Anschluss der mindestens einen Vorrichtung an die Pole (11, 12) der mindestens einen Versorgungsstruktur (1) angeschlossen ist, und wobei insbesondere die Gesamtspannung der Schaltungsanordnung (200) durch die Ausgangsspannung der mindestens einen Versorgungsstruktur (1) bestimmt ist.

15. Verfahren zum Betreiben eines elektrischen Gerätes unter Verwendung der Vorrichtung nach einem der Ansprüche 1 bis 9 oder des Systems nach einem der Ansprüche 10 bis 14 , wobei:
die elektrischen Kontakte des zu betreibenden elektrischen Gerätes mit den Polen (11, 12) der Vorrichtung beziehungsweise mit den Kontakten des Systems verbunden werden,
der Anschluss der mindestens einen Vorrichtung an die Spannungsquelle (300) angeschlossen wird,
und derart eine elektrische Spannung an das zu betreibende elektrische Gerät angelegt wird.
